# EUROPÄISCHE PATENTSCHRIFT

(11) **EP 1 123 831 B1**
(45) Veröffentlichungstag und Bekanntmachung des Hinweises auf die Patenterteilung: **01.09.2004**
(21) Anmeldenummer: 00125896.1
(22) Anmeldetag: 25.11.2000
(51) Int. Cl.: B60N 2/02, B60N 2/48

(54) **Kopfstütze für Fahrzeugsitze**
Headrest for vehicle seats
Appui-tête pour sièges de véhicule

(30) Priorität: 11.02.2000 DE 10006099
(43) Veröffentlichungstag der Anmeldung: 16.08.2001
(73) Patentinhaber: GRAMMER Automotive GmbH, 92224 Amberg (DE)
(72) Erfinder: Lotz, Norbert, 42799 Leichlingen (DE); Michalka, Ralph, 40627 Düsseldorf (DE)
(74) Vertreter: Patentanwälte Ostriga, Sonnet, Wirths & Roche

(56) Entgegenhaltungen:
- EP-A- 0 469 979
- DE-A- 3 519 351
- DE-U- 20 002 484
- DE-U- 29 911 221

## Beschreibung

Die Erfindung betrifft eine Kopfstütze für Fahrzeugsitze entsprechend dem Oberbegriff des Anspruchs 1. Eine solche Kopfstütze ist in der DE 35 19 351 C2 beschrieben.

Bei der Kopfstütze gemäß der DE 35 19 351 C2 ist eine elektromotorische Antriebseinheit im unteren Rahmensteg eines rahmenförmigen Kopfpolsterträgers eingebaut. Aus beiden Stirnseiten der Antriebseinheit tritt je ein Antriebselement in Form einer Antriebswelle aus, welche endständig ein Ritzel trägt, das jeweils mit einer als Zahnstange ausgebildeten Tragstange kämmt. Jeder Zahn einer tragstangenseitigen Zahnreihe bildet daher für das Antriebselement ein tragstangenseitiges Widerlager. Je nach Drehrichtung der beiden gleichsinnig umlaufenden Antriebswellen kann der Kopfpolsterträger der bekannten Kopfstütze nach oben oder nach unten verstellt werden.

Die bekannte Kopfstütze gemäß der DE 35 19 351 C2 zählt zur Gattung der innenhöhenverstellbaren Kopfstützen, bei denen - im Unterschied zu den sitzlehnenseitig höhenverstellbaren Kopfstützen - die Höhenverstellbewegung der Kopfstütze durch eine Relativbewegung zwischen den sitzlehnenseitig festgelegten Tragstangen und dem zu letzteren relativbeweglichen Kopfpolsterträger erfolgt.

Bei der in der DE 35 19 351 C2 beschriebenen Kopfstütze handelt es sich um eine speziell ausgestaltete Kopfstütze, bei welcher sowohl die eigentlichen Kopfstützenelemente als auch die motorische Antriebseinheit mit ihren Antriebselementen besonders aufeinander abgestimmt sind und so eine individuelle, weitestgehend integrierte Baueinheit bilden.

Ausgehend von der durch die DE 35 19 351 C2 bekannten Kopfstütze, liegt der Erfindung die Aufgabe zugrunde, eine Kopfstütze zu schaffen, deren motorische Antriebseinheit eine kompakte Bauform und außerdem vielfältige Anwendungsmöglichkeiten bezüglich der Höhenverstellung einer Kopfstütze gestattet.

Entsprechend der Erfindung wird diese Aufgabe gemeinsam mit den Merkmalen des Oberbegriffs des Anspruchs 1 dadurch gelöst, dass die motorische Antriebseinheit sowohl bezüglich der Tragstange als auch bezüglich des Kopfpolsterträgers relativbeweglich höhenverstellbar geführt ist, dass von der motorischen Antriebseinheit zwei entgegengesetzt zueinander höhenverstellbar bewegliche Antriebselemente ausgehen, von denen das erste Antriebselement mit einer der Antriebseinheit abgewandten Kraftangriffsstelle mindestens mittelbar an der Tragstange und das zweite Antriebselement mit einer der Antriebseinheit abgewandten Kraftangriffsstelle mindestens mittelbar am Kopfpolsterträger abstützbar sind.

Die erfindungsgemäße Antriebseinheit bildet eine von der individuellen speziellen Bauform einer Kopfstütze (vgl. dazu DE 35 19 351 C2) weitestgehend unabhängige kompakte eigenständige Baugruppe, deren Antriebselemente auf unterschiedliche Weise an den relativ zueinander zu bewegenden Bauteilen einer Kopfstütze, nämlich an der Tragstange oder an den Tragstangen und an dem Kopfpolsterträger, angreifen können.

Die Unabhängigkeit der erfindungsgemäßen Antriebseinheit ist zudem dadurch bedingt, dass letztere sowohl bezüglich der Tragstange als auch bezüglich des Kopfpolsterträgers relativbeweglich höhenverstellbar geführt ist.

Jedes der beiden Antriebselemente kann sowohl zugfest als auch zug- und druckfest bezüglich des korrespondierenden Kopfstützen-Bauteils, also bezüglich der Tragstange oder bezüglich des Kopfpolsterträgers, angeordnet sein.

Dadurch, dass die beiden Antriebselemente entgegengesetzt zueinander höhenverstellbar sind, ist außerdem die Voraussetzung zu einer niedrig bauenden Antriebseinheit geschaffen worden, die zugleich einen großen Verstellweg gestattet.

Eine erfindungsgemäße Ausführungsform besteht darin, dass die Kraftangriffsstelle des ersten Antriebselements mindestens mittelbar nur druckfest an der Tragstange und die Kraftangriffsstelle des zweiten Antriebselements mindestens mittelbar ebenfalls nur druckfest am Kopfpolsterträger abstützbar sind.

Diese Ausführungsform gestattet insbesondere im Zusammenhang mit einer Fondkopfstütze folgenden Vorteil: für den Fall, dass eine Fondkopfstütze ihre maximale Höhenlage einnimmt und dabei z.B. die rückwärtige Sicht des Fahrers behindert, werden die beiden Antriebselemente ausgefahren, wobei sich ein Antriebselement oben tragstangenseitig und das andere Antriebselement unten am Kopfpolsterträger jeweils nur druckfest abstützt. Während sich die beiden Antriebselemente, ausgehend von der Antriebseinheit, gewissermaßen auseinanderspreizen, wird der Kopfpolsterträger in seine niedrigste Position nach unten verstellt.

Da die Antriebseinheit entweder tragstangenseitig oder am Kopfpolsterträger relativ beweglich höhenverstellbar geführt ist, ist es gleichgültig, in welcher individuellen Ausgangs-Höhenlage sich die Antriebseinheit befindet, da die Kraftangriffsstellen der beiden Antriebselemente jeweils selbständig zu den korrespondierenden tragstangenseitigen oder kopfpolsterträgerseitigen Widerlagerstellen gelangen, zumal die Antriebseinheit etwaige Höhenunterschiede durch eine Anpassungsbewegung korrigieren kann.

Ein erneutes Verschieben der Kopfstütze in die Höhenlage hinein geschieht bei der vorbeschriebenen erfindungsgemäßen Ausführungsform zweckmäßig derart, dass zunächst die beiden Antriebselemente selbsttätig eingefahren werden, worauf eine ungehinderte Verstellung der Kopfstütze nach oben von Hand erfolgen kann.

Eine andere erfindungsgemäße Ausführungsform, welche z.B. in Verbindung mit Fondkopfstützen dieselbe vorbeschriebene Handhabungsweise gestattet, besteht entsprechend der Erfindung darin, dass die Kraftangriffsstelle des ersten Antriebselements mindestens mittelbar zug- und druckfest oder nur druckfest an der Tragstange und die Kraftangriffsstelle des zweiten Antriebselements mindestens mittelbar nur druckfest oder zug- und druckfest am Kopfpolsterträger abstützbar sind.

Demnach können beispielsweise die Kraftangriffsstelle des ersten Antriebselements zug- und druckfest an der Tragstange und die Kraftangriffsstelle des zweiten Antriebselements nur druckfest am Kopfpolsterträger abgestützt sein. Bei einer solchen Ausführungsform ist die motorische Antriebseinheit über die Kraftangriffsstelle des ersten Antriebselements zug- und druckfest an der Tragstange gehalten. Dies hat den Vorteil, dass die motorische Antriebseinheit sich während ihrer Höhenverstellung am ersten Antriebselement führen kann, so dass keine weiteren Mittel zur Führung der Antriebseinheit bezüglich der Tragstange bzw. bezüglich des Kopfpolsterträgers erforderlich sind.

Schließlich ist eine Ausführungsform einer erfindungsgemäßen Kopfstütze dadurch gekennzeichnet, dass die Kraftangriffsstelle des ersten Antriebselements mindestens mittelbar zug- und druckfest an der Tragstange und die Kraftangriffsstelle des zweiten Antriebselements mindestens mittelbar ebenfalls zug- und druckfest am Kopfpolsterträger abstützbar sind. Bei dieser erfindungsgemäßen Ausführungsform erfolgt die Höhenverstellung des Kopfpolsterträgers in beiden Richtungen motorisch.

Eine von der Erfindung besonders bevorzugte Ausführungsform besteht darin, dass jedes Antriebselement eine Zahnstange der als Zahnstangengetriebe ausgebildeten Antriebseinheit ist.

Eine weitere Ausgestaltung einer Antriebseinheit zu einer besonders kompakten und niedrigen Bauform mit großem Verstellweg hat die Erfindung dadurch geschaffen, dass die Antriebseinheit ein motorisch antreibbares Ritzel aufweist, welches an zwei gegenüberliegenden Umfangsstellen gemeinsam mit den beiden als Zahnstangen ausgebildeten und im Parallelabstand zueinander angeordneten Antriebselementen kämmt.

In den Zeichnungen sind bevorzugte Ausführungsbeispiele entsprechend der Erfindung dargestellt, es zeigt
Fig. 1 eine vertikale Schnittansicht einer ersten Ausführungsform einer in ihrer Hochlage befindlichen Kopfstütze,
Fig. 2 die Kopfstütze gemäß Fig. 1 in ihrer Tieflage,
Fig. 3 die Kopfstütze gemäß Fig. 1 in ihrer Tieflage und zugleich in einer Bereitstellungsposition ihrer Antriebseinheit,
Fig. 4 in Anlehnung an die Darstellung gemäß Fig. 2 eine zweite Ausführungsform einer Kopfstütze, deren Kopfpolsterträger in seine Tieflage hinein verschoben ist,
Fig. 5 die Kopfstütze gemäß Fig. 4 bei Tieflage des Kopfpolsterträgers und in Bereitstellungsposition der Antriebseinheit und
Fig. 6 in Anlehnung an die Darstellungen der Fig. 2 und 4 eine dritte Ausführungsform einer Kopfstütze in ihrer Tieflage.

In den Zeichnungen ist die jeweilige Kopfstütze unabhängig von ihrer Ausgestaltung jeweils mit der Bezugsziffer 10 versehen. Auch sind einander analogen Bauteilen unabhängig von ihrer besonderen Ausführungsform stets dieselben Bezugsziffern zugeordnet.

Die Kopfstütze 10 weist einen Kopfpolsterträger 11 auf, der mit einem Kopfpolster 12 bekleidet ist. Zur Gleitführung und stufenweisen Höhenverstellung ist der Kopfpolsterträger 11 mit zwei an ihm gehaltenen Gleithülsen 13 versehen, welche Rastfedem 14 tragen, deren sich etwa tangential bzw. sekantial zu den Tragstangen 16 erstreckende Rastschenkel 15 mit Rastkerben 17 an der Mantelfläche der Tragstangen 16 verstellarretierbar zusammenwirken.

Die nach unten weisenden Einsteckbereiche 18 der beiden Tragstangen 16 sind in Einsteckhülsen 19 unverschieblich herausnehmbar arretiert. Die Einsteckhülsen 19 sind in dem teilweise dargestellten Sitzlehnenrahmen 20 steckverrastet.

Die oberen Enden 21 der beiden Tragstangen 16 sind mittels eines Jochs 22 starr miteinander verbunden.

Die Rastkerben 17 sind formlich so gestaltet und wirken derart mit den Rastschenkeln 15 der Rastfedern 14 zusammen, dass eine Verstellung des Kopfpolsterträgers 11 in Richtung y, also zur Hochlage hin, relativ leicht und in entgegengesetzter Richtung z, also zur Tieflage hin, schwergängiger erfolgt.

Innerhalb des Kopfpolsterträgers 11, und zwar innerhalb des von den beiden Tragstangen 16, dem Joch 22 und dem Boden 24 des Kopfpolsterträgers 11 umgrenzten Raumes 23, ist eine motorische Antriebseinheit 25 aufgenommen, welche wie folgt aufgebaut ist: in einem Gehäuse 26 befindet sich ein Elektromotor (Gleichstrommotor) 27, dessen Motorwelle 28 über eine Schnecke 29 ein Schneckerad 30 treibt, welches über mehrere Zahnräder (Binderäder) mit einem Ritzel 31 getrieblich verbunden ist, welches zugleich mit den Zahnreihen 32, 33 einer ersten Zahnstange A1 und einer zweiten Zahnstange A2 kämmt.

Der Elektromotor 27 ist reversierbar, d.h. hinsichtlich seiner Drehrichtung umkehrbar. Die Kraftangriffsstelle K1 der ersten Zahnstange A1 ist mittels einer Befestigungslaschenanordnung 34 zug- und druckfest mit dem Joch 22 verbunden.

Die Kraftangriffsstelle K2 der zweiten Zahnstange A2 stützt sich lediglich druckfest auf Verstärkungsrippen 35 ab, die im Bereich des Bodens 24 des Kopfpolsterträgers 11 vorgesehen sind.

Nach diesen Ausführungen ist vorstellbar, dass die Antriebseinheit 25 lediglich im Bereich ihrer Kraftangriffsstelle K1 am Joch 22 befestigt ist, also gewissermaßen am Joch 22 "hängt".

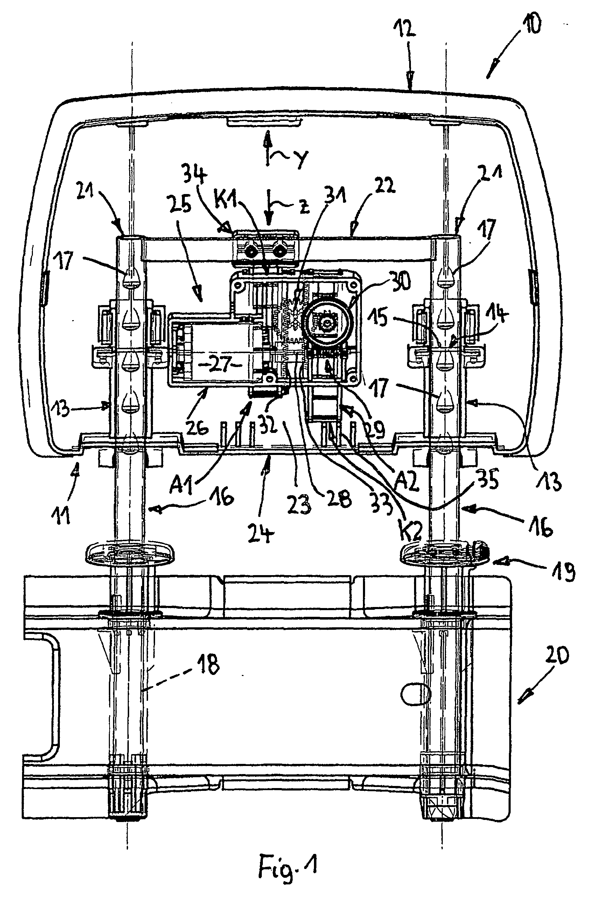

Die in den Fig. 1-3 dargestellte Kopfstütze 10 funktioniert wie folgt:

Wenn sich der Kopfpolsterträger 11 beispielsweise einer Fondkopfstütze 10, wie in Fig. 1 dargestellt, in seiner Hochlage befindet, dabei aber das rückwärtige Blickfeld des Fahrers verstellt, wird der Elektromotor 27 mit einer derartigen Drehrichtung eingeschaltet, dass die Zahnstangen A1 und A2 aus dem Gehäuse 26 der Antriebseinheit 25 hervortreten. Dabei bewegt sich das Gehäuse 26 in Richtung z nach unten, ebenso wie die sich mit ihrer Kraftangriffsstelle K2 auf den bodenseitigen Verstärkungsrippen 35 des Kopfpolsterträgers 11 lediglich druckfest abstützende zweite Zahnstange A2.

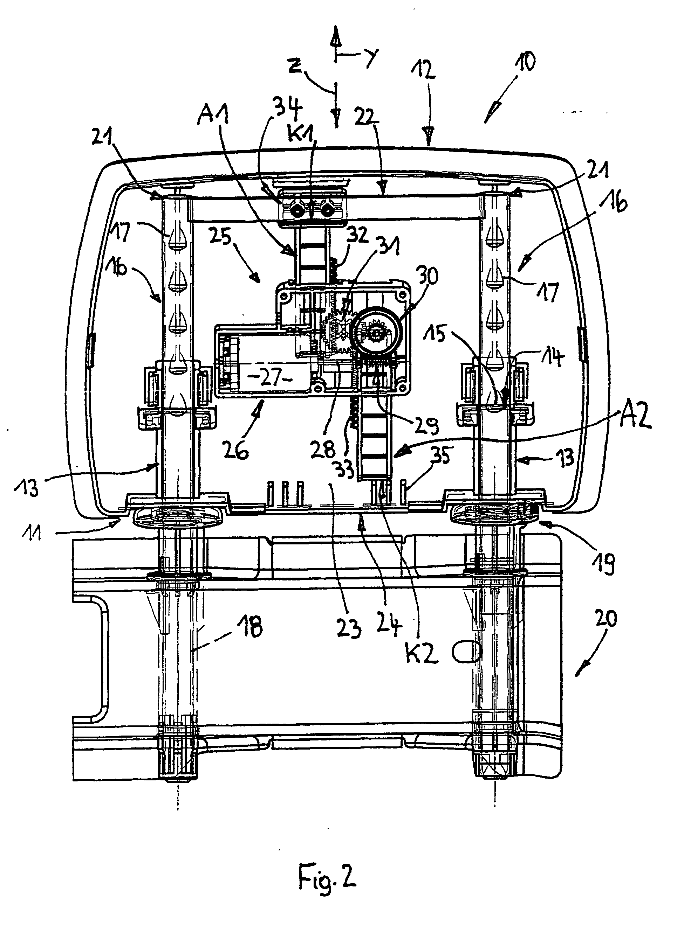

Wie anhand von Fig. 2 zu ersehen, hat sich dabei der Kopfpolsterträger 11 in seine Tieflage hineinbewegt.

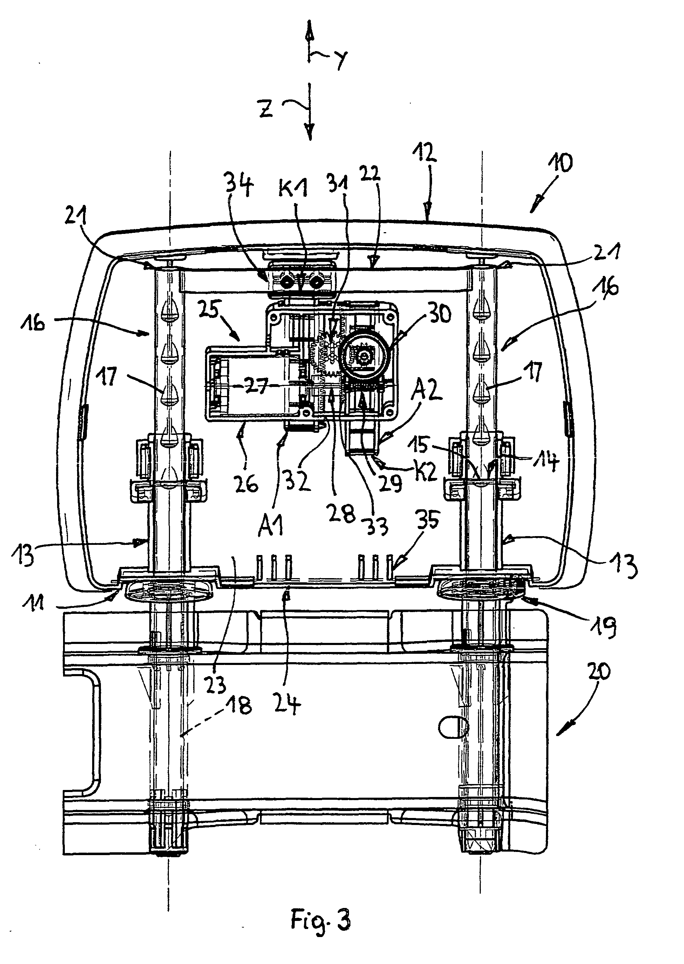

Sobald die Tieflage des Kopfpolsterträgers 11 erreicht ist, sorgt ein elektrisches Rückmeldesignal der Antriebseinheit 25 selbsttätig dafür, dass der Elektromotor 27 in seiner umgekehrten Drehrichtung aktiviert wird, worauf beide Zahnstangen A1 und A2 in das Gehäuse 26 einfahren. Dabei "klettert" die Antriebseinheit 25 mittels ihres Ritzels 31 gewissermaßen bis in die in Fig. 3 gezeigte angehobene Bereitstellung. Diese Bereitstellung ist Voraussetzung dafür, dass der Kopfpolsterträger 11, sofern es von den Fond-Fahrgästen gewünscht ist, wiederum von Hand in seine Hochlage gemäß Fig. 1 verstellt werden kann.

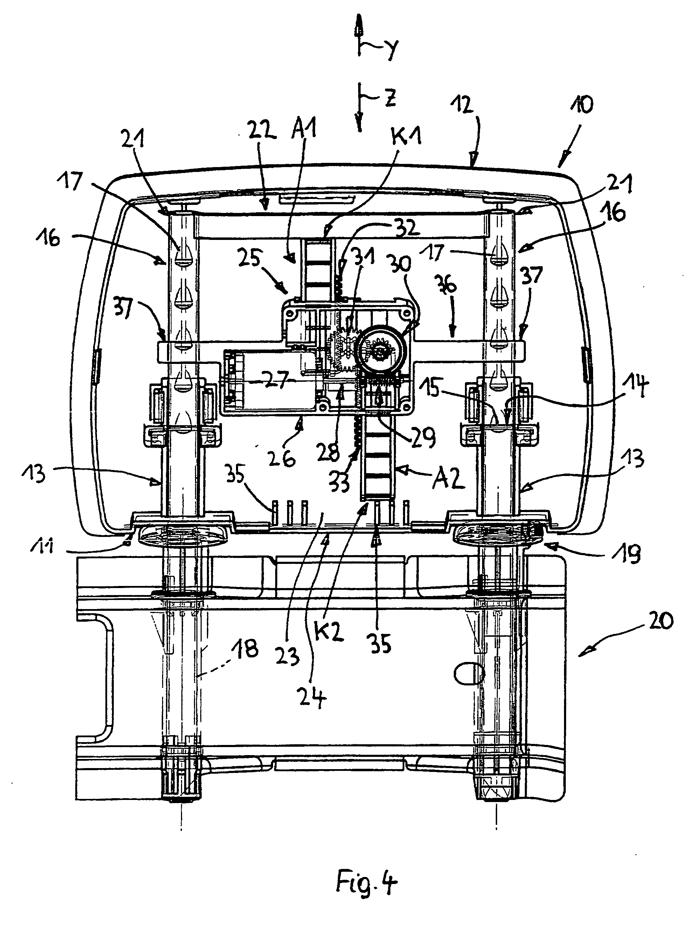

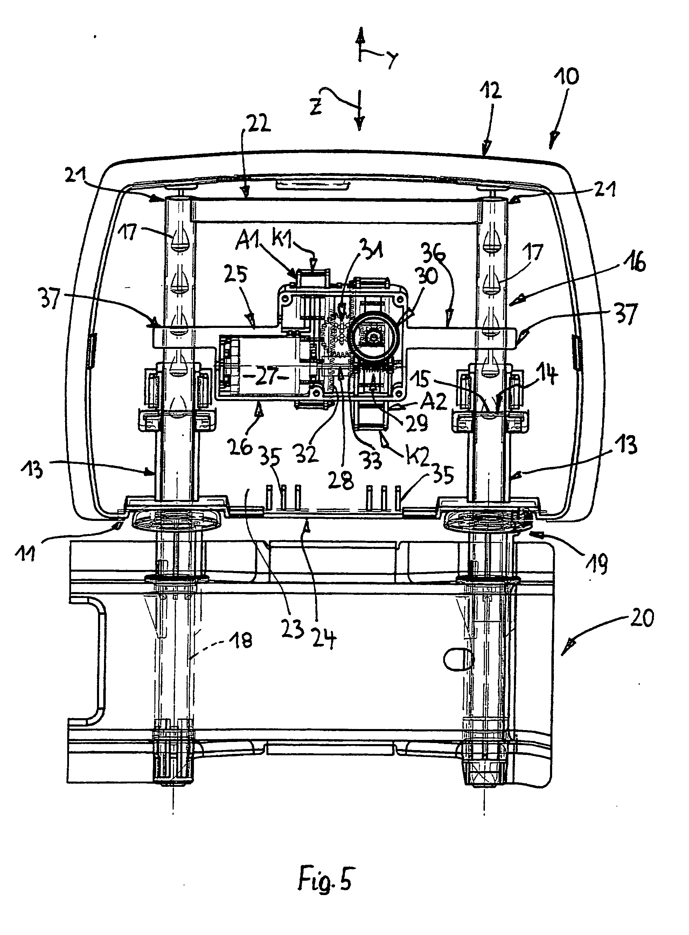

Die zweite Ausführungsform einer Kopfstütze 10 gemäß den Fig. 4 und 5 unterscheidet sich von der ersten Ausführungsform gemäß den Fig. 1-3 dadurch, dass das Gehäuse 26 eine Traverse 36 bildet, welche an ihren beiden Enden je einen eine Tragstange 16 umgreifenden Führungsbereich, und zwar einen Gleitführungsbereich 37, aufweist.

Zudem sind die beiden Kraftangriffsstellen K1 und K2 lediglich druckfest am Joch 22 bzw. an den bodenseitigen Verstärkungsrippen 35 des Kopfpolsterträgers 11 abstützbar.

Allein anhand von Fig. 4 ist vorstellbar, dass dank der Traverse 36 mit den beiden Gleitführungsbereichen 37 die anfängliche Höhenlage der Antriebseinheit 25 bei Hochlage des Kopfpolsterträgers 11 (vgl. Fig. 1) beliebig sein kann. Wenn nämlich der Elektromotor 27 so aktiviert wird, dass die erste Zahnstange A1 in Richtung y und die zweite Zahnstange A2 in Richtung z ausfährt, stellt sich die Tieflage gemäß Fig. 4 automatisch ein, wobei die an den beiden Tragstangen 16 relativbeweglich höhenverstellbar geführte Antriebseinheit 25 - je nach ihrer zuvor eingenommenen Höhenposition - eine Ausgleichsbewegung in Richtung y oder in Richtung z vollführt.

Sobald die Tieflage gemäß Fig. 4 erreicht ist, sorgt wiederum ein elektrisches Rückmeldesignal der Antriebseinheit 25 dafür, dass die Bereitstellungsposition gemäß. Fig. 5 selbsttätig herbeigeführt wird. Wenn nun der Kopfpolsterträger 11 gemäß seiner in Fig. 5 gezeigten Tieflage in seine Hochlage (vgl. Fig. 1) versetzt werden soll, was von Hand geschieht, wird zugleich die Antriebseinheit 25 dank der Gleitführungsbereiche 37 ihrer Traverse 36 in Richtung y so weit nach oben verschoben, bis die Kraftangriffsstelle K1 der ersten Zahnstange A1 von unten gegen das Joch 22 stößt.

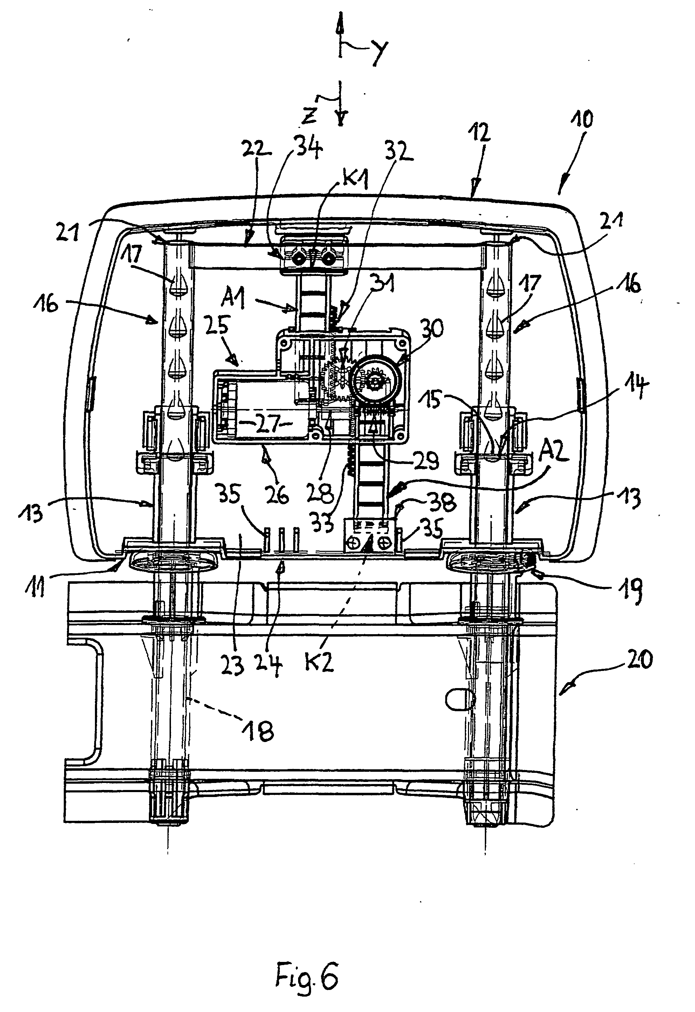

Die in Fig. 6 dargestellte dritte Ausführungsform unterscheidet sich von der in den Fig. 1 bis 3 gezeigten ersten Ausführungsform lediglich dadurch, dass zusätzlich zur Kraftangriffsstelle K1 auch die Kraftangriffsstelle K2 der zweiten Zahnstange A2 mittels einer Befestigungslaschenanordnung 38 mit dem Boden 24 des Kopfpolsterträgers 11 zug- und druckfest verbunden ist.

Da beide Kraftangriffsstellen K1 und K2 der Zahnstangen A1 und A2 zum einen mit dem Joch 22 und zum anderen mit dem Boden 24 des Kopfpolsterträgers 11 zug- und druckfest verbunden sind, kann durch reversierbaren Betrieb des Elektromotors 27 der Kopfpolsterträger 11 nach oben in Richtung y oder nach unten in Richtung z verstellt werden.

Bei Nichtvorhandensein der Rastkerben 17 ist in diesem Zusammenhang auch eine stufenlose Höheneinstellung denkbar, zumal das eine relativ große Selbsthemmung bedingende Schneckengetriebe 29, 30 der Antriebseinheit 25 den Kopfpolsterträger 11 praktisch in jeder Höhenlage hinreichend arretiert. Die elektrische Ausrüstung kann dabei so gewählt sein, dass jeweils bei Erreichen der Hochlage oder der Tieflage des Kopfpolsterträgers 11 eine Endabschaltung erfolgt, ggf. verbunden mit einer Umschaltung in die andere Drehrichtung.

## Patentansprüche

1. Kopfstütze (10) für Fahrzeugsitze mit einem an mindestens einer sitzlehnenseitig gehaltenen Tragstange (16) höhenverstellbar geführten Kopfpolsterträger (11), an welchem sich mindestens mittelbar eine motorische Antriebseinheit (25) abstützt, welche mindestens ein Antriebselement (A1, A2) aufweist, welches zur Höhenverstellung des Kopfpolsterträgers (11) entlang der Tragstange (16) relativbeweglich ist und sich dabei an mindestens einem tragstangenseitigen Widerlager (34; 37) abstützt, **dadurch gekennzeichnet, dass** die motorische Antriebseinheit (25) sowohl bezüglich der Tragstange (16) als auch bezüglich des Kopfpolsterträgers (11) relativbeweglich höhenverstellbar geführt ist, dass von der motorischen Antriebseinheit (25) zwei entgegengesetzt zueinander höhenverstellbar bewegliche Antriebselemente (A1, A2) ausgehen, von denen das erste Antriebselement (A1) mit einer der Antriebseinheit (25) abgewandten Kraftangriffsstelle (K1) mindestens mittelbar an der Tragstange (16) und das zweite Antriebselement (A2) mit einer der Antriebseinheit (25) abgewandten Kraftangriffsstelle (K2) mindestens mittelbar am Kopfpolsterträger (11) abstützbar sind.

2. Kopfstütze nach Anspruch 1, **dadurch gekennzeichnet, dass** die Kraftangriffsstelle (K1) des ersten Antriebselements (A1) mindestens mittelbar nur druckfest an der Tragstange (16) und die Kraftangriffsstelle (K2) des zweiten Antriebselements (A2) mindestens mittelbar ebenfalls nur druckfest am Kopfpolsterträger (11) abstützbar sind.

3. Kopfstütze nach Anspruch 1, **dadurch gekennzeichnet, dass** die Kraftangriffsstelle (K1) des ersten Antriebselements (A1) mindestens mittelbar zug- und druckfest oder nur druckfest an der Tragstange (16) und die Kraftangriffsstelle (K2) des zweiten Antriebselements (A2) mindestens mittelbar nur druckfest oder zug- und druckfest am Kopfpolsterträger (11) abstützbar sind.

4. Kopfstütze nach einem der Ansprüche 1 bis 3, **dadurch gekennzeichnet, dass** die Kraftangriffsstelle (K1) des ersten Antriebselements (A1) mindestens mittelbar zug- und druckfest an der Tragstange (16) und die Kraftangriffsstelle (K2) des zweiten Antriebselements (A2) mindestens mittelbar ebenfalls zug- und druckfest am Kopfpolsterträger (11) abstützbar sind.

5. Kopfstütze nach einem der Ansprüche 1 bis 4, **dadurch gekennzeichnet, dass** die Kraftangriffsstelle (K1) des ersten Antriebselements (A1) an einem sich quer zur Tragstange (16) erstreckenden Fortsatz (22) abstützbar ist.

6. Kopfstütze nach Anspruch 5, **dadurch gekennzeichnet, dass** der Fortsatz eine die beiden oberen Enden (21) zweier Tragstangen (16) miteinander verbindendes Joch (22) bildet.

7. Kopfstütze nach einem der Ansprüche 1 bis 6, **dadurch gekennzeichnet, dass** die Kraftangriffsstelle (K2) des zweiten Antriebselements (A2) an einem, insbesondere mit Verstärkungen (35) versehenen, unteren Bereich (24) des Kopfpolsterträgers (11) abstützbar ist.

8. Kopfstütze nach einem der Ansprüche 1 bis 7, **dadurch gekennzeichnet, dass** die Antriebseinheit (25) an mindestens einer Tragstange (16) höhenverstellbar geführt ist, insbesondere gleitgeführt ist.

9. Kopfstütze nach Anspruch 8, **dadurch gekennzeichnet, dass** die Antriebseinheit (25) an einer Traverse (36) gehalten ist, welche an ihren beiden Enden je einen eine Tragstange (16) umgreifenden Führungsbereich, insbesondere einen Gleitführungsbereich (37), aufweist.

10. Kopfstütze nach einem der Ansprüche 1 bis 9, **dadurch gekennzeichnet, dass** die beiden Antriebselemente (A1, A2) im wesentlichen stabförmig ausgebildet sind.

11. Kopfstütze nach Anspruch 10, **dadurch gekennzeichnet, dass** die beiden Antriebselemente (A1, A2) geradlinig ausgebildet und translatorisch bewegbar sind.

12. Kopfstütze nach einem der Ansprüche 1 bis 11, **dadurch gekennzeichnet, dass** die beiden Antriebselemente (A1, A2) Kolbenstangen von insbesondere doppeltwirkenden fluidbeaufschlagbaren Kolben-Zylinder-Einheiten sind.

13. Kopfstütze nach Anspruch 12, **dadurch gekennzeichnet, dass** die beiden Kolbenstangen im Parallelabstand nebeneinander angeordnet sind.

14. Kopfstütze nach Anspruch 12, **dadurch gekennzeichnet, dass** die beiden Kolbenstangen koaxial zueinander angeordnet sind.

15. Kopfstütze nach Anspruch 14, **dadurch gekennzeichnet, dass** die beiden Kolbenstangen koaxial hintereinander angeordnet sind.

16. Kopfstütze nach Anspruch 15, **dadurch gekennzeichnet, dass** die Kolben der beiden Kolbenstangen gegenläufig in einem gemeinsamen Zylinder angeordnet sind.

17. Kopfstütze nach einem der Ansprüche 1 bis 11, **dadurch gekennzeichnet, dass** jedes Antriebselement (A1, A2) eine Zahnstange der als Zahnstangengetriebe ausgebildeten Antriebseinheit (25) ist.

18. Kopfstütze nach Anspruch 17, **dadurch gekennzeichnet, dass** die Antriebseinheit (25) ein motorisch antreibbares Ritzel (31) aufweist, welches an zwei gegenüberliegenden Umfangsstellen gemeinsam mit den beiden als Zahnstangen (22, 23) ausgebildeten und im Parallelabstand zueinander angeordneten Antriebselementen (A1, A2) kämmt.

## Claims

1. Headrest (10) for vehicle seats with a head upholstery carrier (11) which is guided in a vertically adjustable manner at least at one support bar (16), retained on the seat back side, and at which a motorized drive unit (25) is supported at least indirectly, which drive unit comprises at least one drive element (A1, A2) which can move in a relative manner along the support bar (16) in order to vertically adjust the head upholstery carrier (11) and is in the process supported at least at one abutment (34; 37) on the support bar side, **characterised in that** the motorized drive unit (25) is guided in a vertically adjustable, relatively mobile manner both with regard to the support bar (16) and with regard to the head upholstery carrier (11), that two drive elements (A1, A2), which can move in a vertically adjustable manner opposite to one another, extend from the motorized drive unit (25), of which the first drive element (A1) can be supported with a force application point (K1), which is remote from the drive unit (25), at least indirectly at the support bar (16), and the second drive element (A2) can be supported with a force application point (K2), which is remote from the drive unit (25), at least indirectly at the head upholstery carrier (11).

2. Headrest according to Claim 1, **characterised in that** the force application point (K1) of the first drive element (A1) can be supported at least indirectly only in a compression-proof manner at the support bar (16), and the force application point (K2) of the second drive element (A2) can be supported at least indirectly also only in a compression-proof manner at the head upholstery carrier (11).

3. Headrest according to Claim 1, **characterised in that** the force application point (K1) of the first drive element (A1) can be supported at least indirectly in a tension- and compression-proof or only in a compression-proof manner at the support bar (16), and the force application point (K2) of the second drive element (A2) can be supported at least indirectly only in a compression-proof or in a tension- and compression-proof manner at the head upholstery carrier (11).

4. Headrest according to any one of Claims 1 to 3, **characterised in that** the force application point (K1) of the first drive element (A1) can be supported at least indirectly in a tension- and compression-proof manner at the support bar (16), and the force application point (K2) of the second drive element (A2) can be supported at least indirectly also in a tension- and compression-proof manner at the head upholstery carrier (11).

5. Headrest according to any one of Claims 1 to 4, **characterised in that** the force application point (K1) of the first drive element (A1) can be supported at a prolongation (22) extending transversely to the support bar (16).

6. Headrest according to Claim 5, **characterised in that** the prolongation forms a yoke (22) connecting together the two upper ends (21) of two support bars (16).

7. Headrest according to any one of Claims 1 to 6, **characterised in that** the force application point (K2) of the second drive element (A2) can be supported at a lower region (24), in particular provided with reinforcements (35), of the head upholstery carrier (11).

8. Headrest according to any one of Claims 1 to 7, **characterised in that** the drive unit (25) is guided in a vertically adjustable manner, in particular guided in a sliding manner, at least at one support bar (16).

9. Headrest according to Claim 8, **characterised in that** the drive unit (25) is retained at a cross-member (36) which comprises at both of its ends a respective guide region, in particular a sliding guide region (37), which embraces a support bar (16).

10. Headrest according to any one of Claims 1 to 9, **characterised in that** the two drive elements (A1, A2) are substantially rod-shaped.

11. Headrest according to Claim 10, **characterised in that** the two drive elements (A1, A2) are rectilinear and can move in a translatory manner.

12. Headrest according to any one of Claims 1 to 11, **characterised in that** the two drive elements (A1, A2) are piston rods of piston-cylinder units which are in particular double-acting and can be acted upon by fluid.

13. Headrest according to Claim 12, **characterised in that** the two piston rods are disposed at a parallel spacing side by side.

14. Headrest according to Claim 12, **characterised in that** the two piston rods are disposed coaxially with one another.

15. Headrest according to Claim 14, **characterised in that** the two piston rods are disposed coaxially one behind the other.

16. Headrest according to Claim 15, **characterised in that** the pistons of the two piston rods are disposed in a common cylinder so as to work in opposite directions.

17. Headrest according to any one of Claims 1 to 11, **characterised in that** each drive element (A1, A2) is a rack of the drive unit (25), which is formed as a rack-and-pinion gear unit.

18. Headrest according to Claim 17, **characterised in that** the drive unit (25) comprises a pinion (31) which can be driven by a motor and which meshes at two opposite circumferential points at the same time with the two drive elements (A1, A2) formed as racks (22, 23) and disposed at a parallel spacing from one another.

## Revendications

1. Appui-tête (10) pour des sièges de véhicule, avec un support de coussin de tête (11), guidé de façon réglable en hauteur, sur au moins une barre support (16), maintenue côté dossier de siège, support de coussin de tête (11), sur lequel prend appui au moins indirectement une unité d'entraînement (25) motorisée, présentant au moins un élément d'entraînement (A1, A2), qui est déplaçable relativement le long de la barre support (16), pour effectuer une manoeuvre de réglage en hauteur du support de coussin de tête (11) et prend alors appui sur au moins un contre-palier (34 ; 37), situé du côté de la barre support, **caractérisé en ce que** l'unité d'entraînement (25) motorisée est guidée de façon réglable en hauteur, avec une mobilité relative, tant par rapport à la barre support (16), qu'également par rapport au support de coussin de tête (11), **en ce que** deux éléments d'entraînement (A1, A2) mobiles, déplaçables en hauteur l'un par rapport à l'autre, partent de l'unité d'entraînement (25) motorisée, éléments d'entraînement dont le premier élément d'entraînement (A1) est susceptible d'être soutenu au moins indirectement sur la barre support (16), à l'aide d'un point d'action de forces (K1), opposé à l'unité d'entraînement (25), et la deuxième unité d'entraînement (A2) est susceptible d'être soutenue, au moins indirectement sur le support de coussin de tête (11), par un point d'action de forces (K2), opposé à l'unité d'entraînement (25).

2. Appui-tête selon la revendication 1, **caractérisé en ce que** le point d'action de force (K1) du premier élément d'entraînement (A1) est susceptible d'être soutenu au moins indirectement, uniquement de façon résistante à la pression, sur la barre support (16), et le point d'action de forces (K2) du deuxième élément d'entraînement (A2) est susceptible d'être soutenu au moins indirectement, également uniquement de façon résistante à la pression, sur le support de coussin de tête (11).

3. Appui-tête selon la revendication 1, **caractérisé en ce que** le point d'action de force (K1) du premier élément d'entraînement (A1) est susceptible d'être soutenu au moins indirectement, de façon résistante à la traction et à la compression, ou bien uniquement de façon résistante à la compression, sur la barre support (16), et le point d'action de force (K2) du deuxième élément d'entraînement (A2) est susceptible d'être soutenu au moins indirectement, uniquement de façon résistante à la compression ou de façon résistante à la traction et à la compression, sur le support d'appui de tête (11).

4. Appui-tête selon l'une des revendications 1 à 3, **caractérisé en ce que** le point d'action de force (K1) du premier élément d'entraînement (A1) est susceptible d'être soutenu au moins indirectement, de façon résistante à la traction et à la compression, sur la barre support (16), et le point d'action de force (K2) du deuxième élément d'entraînement (A2) est susceptible d'être soutenu au moins indirectement, également de façon résistante à la traction et à la compression, sur le support d'appui de tête (11).

5. Appui-tête selon l'une des revendications 1 à 4, **caractérisé en ce que** le point d'action de force (K1) du premier élément d'entraînement (A1) est susceptible d'être soutenu sur un prolongement (22) s'étendant transversalement à la barre support (16).

6. Appui-tête selon la revendication 5, **caractérisé en ce que** le prolongement forme un mandrin (22), reliant les deux extrémités supérieures (21) de deux barres support (16).

7. Appui-tête selon l'une des revendications 1 à 6, **caractérisé en ce que** le point d'action de force (K2) du deuxième élément d'entraînement (A2) est susceptible d'être soutenu sur une zone inférieure (24), en particulier munie de renforcements (35), du support de coussin de tête (11).

8. Appui-tête selon l'une des revendications 1 à 7, **caractérisé en ce que** l'unité d'entraînement (25) est guidée de façon réglable en hauteur, en particulier est guidée de façon coulissante en au moins une barre support (16).

9. Appui-tête selon la revendication 8, **caractérisé en ce que** l'unité d'entraînement (25) est maintenue sur une traverse (36), qui, sur chacune de ses deux extrémités, présente une zone de guidage entourant une barre support (16), en particulier présente une zone de guidage coulissant (37).

10. Appui-tête selon l'une des revendications 1 à 9, **caractérisé en ce que** les deux éléments d'entraînement (A1, A2) sont réalisés sensiblement en forme de bande.

11. Appui-tête selon la revendication 10, **caractérisé en ce que** les deux éléments d'entraînement (A1, A2) sont réalisés de façon rectiligne et déplaçables en translation.

12. Appui-tête selon l'une des revendications 1 à 11, **caractérisé en ce que** les deux éléments d'entraînement (A1, A2) sont des tiges de piston, venant en particulier d'ensembles à pistons et cylindres à double action, sollicités par un fluide.

13. Appui-tête selon la revendication 12, **caractérisé en ce que** les deux tiges du piston sont disposées l'une à côté de l'autre selon un espacement parallèle.

14. Appui-tête selon la revendication 12, **caractérisé en ce que** les deux tiges de piston sont disposées de façon mutuellement coaxiale.

15. Appui-tête selon la revendication 14, **caractérisé en ce que** les deux tiges de piston sont disposées coaxialement l'une derrière l'autre.

16. Appui-tête selon la revendication 15, **caractérisé en ce que** les pistons des deux tiges de piston sont disposées en sens inverse, dans un cylindre commun.

17. Appui-tête selon l'une des revendications 1 à 11, **caractérisé en ce que** chaque élément d'entraînement (A1, A2) est une crémaillère de l'unité d'entraînement (25), réalisée sous la forme de transmission à crémaillère.

18. Appui-tête selon la revendication 17, **caractérisé en ce que** l'unité d'entraînement (25) présente un pignon (31), pouvant être entraîné par un moteur, pignon s'engrenant sur deux points périphériques opposés, conjointement avec les deux éléments d'entraînement (A1, A2), réalisés sous la forme de crémaillères (22, 23) et disposés selon un espacement de parallélisme mutuel.
